# EUROPÄISCHE PATENTSCHRIFT

(11) **EP 0 985 723 B1**
(45) Veröffentlichungstag und Bekanntmachung des Hinweises auf die Patenterteilung: **19.11.2003**
(21) Anmeldenummer: 99104237.5
(22) Anmeldetag: 03.03.1999
(51) Int. Cl.: C10L 5/44

(54) **Festbrennstoff**
Solid fuel
Combustible solide

(30) Priorität: 09.09.1998 DE 29816168 U
(43) Veröffentlichungstag der Anmeldung: 15.03.2000
(73) Patentinhaber: Horbico Holding GmbH, 57520 Langenbach bei Kirburg (DE)
(72) Erfinder: Pfeifer, Manfred, 50189 Elsdorf (DE); Massen, Michael, 50189 Elsdorf (DE)
(74) Vertreter: Patentanwälte Lippert, Stachow, Schmidt & Partner

(56) Entgegenhaltungen:
- WO-A-83/04048
- DE-C- 194 049
- JP-A- 6 147 449
- NL-A- 8 501 083
- US-A- 3 910 775
- US-A- 5 728 192

## Beschreibung

Die Erfindung betrifft einen verdichteten Festbrennstoff enthaltend eine zellulosehaltige Brennstoffkomponente und Pferdedung nach dem Oberbegriff von Anspruch 1 sowie ein Verfahren zu dessen Herstellung nach dem Oberbegriff von Anspruch 8.

Festbrennstoffe sind vielfältig bekannt, wie beispielsweise Steinkohle, Braunkohle, Holz oder andere organische Feststoffe.

Derartige Festbrennstoffe können sowohl in Großfeuerungsanlagen als auch zum Hausbrand eingesetzt werden, wobei die Brennstellen gegebenenfalls auch als offene Kamine ausgebildet sein können.

Die Verbrennung derartiger Festbrennstoffe ist aufgrund des Kohlenstoffgehaltes der Brennstoffe zwangsläufig mit einer Kohlendioxidentwicklung verbunden. Bei fossilen Brennstoffen besteht dabei das Problem, dass diese insgesamt zu einer Erhöhung des Kohlendioxidgehaltes in der Atmosphäre führen, was unerwünscht ist, da Kohlendioxid ein Treibhausgas darstellt.

Die Verbrennung nachwachsender organischer Materialien wie Holz, Stroh oder dergleichen ist zwar unter diesem Gesichtspunkt umweltfreundlicher, da die Verbrennung nachwachsender Rohstoffe, die bei ihrem Wachstum Kohlendioxid aus der Atmosphäre verbrauchen, bezüglich der Ökobilanz kohlendioxidneutral ist.

Ein weiteres Problem bei der Verbrennung der oben genannten Festbrennstoffe ist jedoch, dass bei der Verbrennung zugleich auch umweltschädliche Stickoxide entstehen. Bekanntlich hängt die Bildung von Stickoxiden mit der jeweiligen Verbrennungstemperatur zusammen. Diese kann jedoch nicht frei von weiteren Prozessbedingungen gewählt werden, beispielsweise um eine möglichst vollständige Verbrennung des Festbrennstoffes zu gewährleisten.

Die WO 83/04048 beschreibt ein Verfahren zur Herstellung eines synthetischen Brennstoffes, in welchem Papierfragmente mit tierischem Dung und/oder Abwasserschlamm vermischt und nachfolgend hierzu unter Bildung von festen Blöcken oder Pellets eines verbrennbaren Materials verdichtet und getrocknet werden. Der Tierdung kann Pferdedung sein.

Die US-A-5 728 192 beschreibt eine Methode zur Verarbeitung faserförmiger Abfälle, die zu einem Produkt führt, das unbehandelten Holzabfall sowie einen Schlamm enthält, wobei die Einsatzstoffe in vermahlener und gemischter Form vorliegen. Der Schlamm kann von tierischen Abfällen einschließlich Pferdedung abstammen und soll in relativ trockener Form vorliegen.

Das JP-Abstract 06147449 beschreibt ein Verfahren zur Verbrennung von Pferdedung, wobei mit Sägespänen umgebener Pferdedung auf einem Rost einer Verbrennungseinrichtung geschichtet und anschließend unter Zufuhr von Verbrennungsluft entzündet wird.

Der Erfindung liegt die Aufgabe zugrunde, einen möglichst umweltfreundlichen und einfach handhabbaren Festbrennstoff und ein Verfahren zu dessen Herstellung zur Verfügung zu stellen.

Diese Aufgabe wird durch einen verdichteten Festbrennstoff mit einer zellulosehaltigen Brennstoffkomponente und Pferdedung als weiterer Komponente mit den Merkmalen des Anspruchs 1 gelöst. Des weiteren wird die Aufgabe durch ein entsprechendes Verfahren zur Herstellung des Festbrennstoffs mit den Merkmalen des Anspruchs 8 gelöst.

Weitere vorteilhafte Ausführungsformen sind den Unteransprüchen zu entnehmen.

Als zellulosehaltige Brennstoffkomponente werden Holz und/oder ein holzartiger Stoff wie Rinde, Borke oder Holzmark jeweils einzeln oder als Gemenge von zwei oder mehr Komponenten eingesetzt, wobei erfindungsgemäß das Holz und/oder der holzartige Stoff in Form von Spänen oder das Holz in Form von Holzwolle vorliegt.

Der Zellulosegehalt der Brennstoffkomponente beträgt dabei vorzugsweise größer 40%, beispielsweise ca. 45-50%, bezogen auf den Trockenanteil der jeweiligen Komponente, wie dies z.B. typischerweise für Fichten- bzw. Nadelhölzer der Fall ist. Des weiteren kann die zellulosehaltige Komponente, wie bei Hölzern typisch, Bestandteile wie Lignin (ca. 25-30%) sowie Hemicellulosen bzw. Polyosen (Gehalt ca. 15-20%), jeweils bezogen auf den Trockenanteil, aufweisen. Pektinreiche Stoffe wie Stroh können ggf. ebenfalls eingesetzt werden, sind aber weniger vorteilhaft.

In Verbindung mit dem eingesetzten Pferdedung wirken das Holz und/oder der holzartige Stoff als Absorptionsmittel, welches die Feuchtigkeit des Pferdedunges effektiv aufnimmt, so dass ein inniges und gut handhabbares Gemenge beider Komponenten einfach herstellbar ist.

Die Späne weisen vorzugsweise eine Länge von ca. 0,5 bis 4 cm, besonders bevorzugt von ca. 2 cm, und eine Stärke von vorzugsweise 0,5 bis 2 mm, besonders bevorzugt von ca. 1 mm, auf. Derartige Späne zeigen eine noch sehr gute Feuchtigkeitsaufnahme, ohne mit dem Pferdedung, insbesondere wenn dieser einen hohen Wassergehalt aufweist, zu verklumpen. Bei der gegebenen Zerteilung des Holzes können die verschiedenen Komponenten somit besonders einfach homogen vermischt werden.

Des weiteren können derartige Holzspäne als übliche Einstreu in Pferdeställen verwendet werden, so dass ein getrennter Transport des Pferdedunges bis zur Vermischung der Komponenten nicht erforderlich ist.

Der Holzanteil im Festbrennstoff kann 40 bis 80 Gew.-%, vorzugsweise 50 bis 70 Gew.-%, betragen. Unter Holzanteil sei hier der Gesamtanteil des Holzes und des oder der holzartigen Stoffe verstanden. Sollte der Festbrennstoff weitere zellulosehaltige Komponenten enthalten, so kann der Holzanteil gegebenenfalls um bis zu dem zugesetzten Anteil der weiteren Komponente reduziert werden. Gegebenenfalls kann der Festbrennstoff auch andere, nichtzellulosehaltige, brennbare Komponenten aufweisen.

Der Pferdedunganteil des Festbrennstoffs, bezogen auf einen unbehandelten Frischdung, kann 20 bis 60 Gew.-%, vorzugsweise 30 bis 50 Gew.-%, betragen.

Ferner wurde überraschend festgestellt, dass durch die Verwendung von Pferdedung als zusätzlicher Komponente des Festbrennstoffes die Emission von Stickoxiden deutlich vermindert werden kann. Dies ist anscheinend auf den Harnstoffgehalt des Pferdedungs zurückzuführen, der eine natürliche Quelle von Ammoniak bzw. von Stoffen darstellt, die unter den Verbrennungsbedingungen Ammoniak freisetzen, so dass bei der Verbrennung des Festbrennstoffes die entstehenden Stickoxide durch Harnstoff bzw. Ammoniak reduziert werden. Eine Einführung eines synthetischen Reduktionsmittels wie synthetischem Ammoniak zur Verhinderung der Stickoxidemissionen, die einen entsprechenden Energieaufwand bei deren Synthese und damit zu einer Verschlechterung der Ökobilanz führen würden, wird hierdurch vermieden. Auch bezüglich der Emission möglicher sonstiger umweltschädlicher Verbrennungsprodukte wie z.B. Dioxine ist der erfindungsgemäße Festbrennstoff neutral.

Des weiteren wurde überraschend festgestellt, dass die Handhabung des Pferdedung enthaltenden Festbrennstoffes wie auch dessen Verfeuerung nicht mit unangenehmen Gerüchen verbunden ist, so dass die Handhabung des Festbrennstoffes und auch dessen Verfeuerung an offenen oder manuell zu beschickenden Feuerstellen problemlos möglich ist. Eine Vorbehandlung der Einzelkomponenten oder der gemischten oder verdichteten Komponenten zur Verhinderung von Geruchsbelästigungen oder aus anderen Gründen, wie z.B. in Form einer Dampfbehandlung, ist nicht erforderlich.

Die eingesetzte zellulosehaltige Brennstoffkomponente weist vorteilhafterweise einen Feuchtigkeit von kleiner 60%, vorzugsweise kleiner 40%, besonders bevorzugt von ca. 10-20%, bezogen auf den Trockenanteil auf.

Der Festbrennstoff kann mehr als 5 mg Harnstoff je Kilogramm Festbrennstoff enthalten, vorzugsweise enthält der zu verfeuernde Festbrennstoff 15 bis 30 mg Harnstoff je Kilogramm Festbrennstoff, wobei auch geringere Harnstoffgehalte bereits zu einer Reduzierung der Stickoxidemission führen können.

Liegt der Festbrennstoff in verdichteter Form vor, so ist dieser besonders einfach handhabbar. Beispielsweise kann der Festbrennstoff in brikettierter Form mit einem Brikettdurchmesser kleiner 7,5 cm (3 Zoll) vorliegen, ohne hierauf beschränkt zu sein, vorzugsweise mit einem Brikettdurchmesser von ca. 5 cm (2 Zoll). Der Festbrennstoff kann auch zu Pellets mit einem Durchmesser von vorzugsweise größer 6 mm verarbeitet werden.

Vorteilhafterweise weist der Festbrennstoff einen Feuchtigkeitsgehalt von unter 8 Gew.-% auf, wodurch eine besonders saubere Verbrennung gewährleistet ist.

Der Festbrennstoff kann weitere Komponenten bzw. Zuschlagstoffe wie z.B. Kalk enthalten, die die Verbrennung oder die Eigenschaften der Verbrennungsprodukte positiv beeinflussen.

Vorzugsweise ist der Festbrennstoff derart erhalten worden, daß die einzelnen Komponenten in einem ersten Schritt innig vermengt werden, daß anschließend das Gemenge bis auf einen Feuchtigkeitsgehalt von maximal 18 Gew.-% vorgetrocknet wird und daß in einem nachfolgenden Schritt die vorgetrocknete Mischung unter Druck verdichtet wird.

Die weiteren Komponenten bzw. Zuschlagstoffe können vor oder nach der Vortrocknung zu den übrigen Komponenten zugegeben werden.

Eine ausreichende Vortrocknung des Holz und Pferdedung enthaltenen Gemisches kann bereits durch eine Verrottung in einem Zeitraum von mehreren Tagen erzielt werden, wobei bei dem Verrottungsprozeß die Eigenwärme des Pferdedungs eine Rolle spielt.

Vorteilhafterweise erfolgt die Trocknung jedoch in einer geeigneten Trocknungseinrichtung, beispielsweise in einem Fließbetttrockner.

Eine Verdichtung unter einem Druck von 40 bis 100 bar hat sich als praktikabel erwiesen. Der Verdichtungsschritt kann ohne Kühlung oder Erwärmung des Brennstoffmaterials erfolgen, derartige Maßnahmen können jedoch gegebenenfalls vorgenommen werden. Insbesondere bei der Verdichtung des Festbrennstoffes hat sich die Kombination der Komponenten holzartiger Stoff aber insbesondere Holz und Pferdedung als sehr vorteilhaft herausgestellt, da Pferdedung einen vergleichsweise hohen Anteil an faserigen Bestandteilen aufweist, die mit Holz besonders gut zu formstabilen Preßlingen verarbeitbar sind.

Der erfindungsgemäße Festbrennstoff kann ohne weiteres in üblichen Feststoffbrennkesseln verfeuert werden, aber auch im Hausbrand und falls erwünscht auch in offenen Kaminen, ohne daß eine Geruchsbelästigung beobachtet wird.

Der erfindungsgemäße Festbrennstoff kann auch zusammen mit anderen Festbrennstoffen, wie beispielsweise Braunkohlenbrikoletts verfeuert werden, wobei der erfindungsgemäße Festbrennstoff einen Anteil an 20 bis 100 Gew.-% an dem Brennstoffgemisch haben kann. Die weiteren Festbrennstoffe können vor der Einbringung in die Feuerstelle mit dem erfindungsgemäßen Festbrennstoff vermischt und ggf,. auch vor der Verbrennung mit diesem verpreßt werden oder auch nacheinander oder im losen Gemenge der Feuerstelle zugeführt werden.

Die Erfindung wird nachfolgend an einem Ausführungsbeispiel erläutert.

Zur Herstellung des erfindungsgemäßen Festbrennstoffes werden 60 Gew.-% Holzspäne mit 40 Gew.-% Pferdedung innig vermischt, wobei eine Vormischung bereits dadurch erhalten wird, daß die Holzspäne als Einstreu in Pferdeställen verwendet werden. Der üblicherweise derart erhaltene Pferdemist weist bereits eine Zusammensetzung auf, die zur Herstellung des erfindungsgemäßen Festbrennstoffes verwendbar ist.

Die derart erhaltene homogene Mischung weist einen Feuchtigkeitsgehalt von ca. 40 Gew.-% und einen Harnstoffgehalt von ca. 300 mg/kg der Mischung auf. In Abhängigkeit vom Gehalt an Pferdedung sowie von dessen Herkunft und Handhabung kann der Harnstoffgehalt der Mischung auch niedriger sein und z.B. ca. 200 mg/kg betragen, unter Umständen aber auch höhere Werte als 300 mg/kg annehmen. Das homogenisierte Gemisch wird anschließend in einem Fließbetttrockner vorgetrocknet, wobei der Feuchtigkeitsgehalt auf ca. 18 Gew.-% reduziert wird.

Anschließend wird der Mist in einer Brikettpresse unter einem Druck von 70 bar, ohne daß eine Kühlung notwendig ist, gepreßt. Der Feuchtigkeitsgehalt der fertigen Briketts beträgt ca. 5 bis 6 Gew.-%, der Harnstoffgehalt 19 mg/kg Festbrennstoff. Der Brennwert beträgt 5 kWh/kg Festbrennstoff.

Der erfindungsgemäße Festbrennstoff kann z.B. bei 800 bis 850 °C, gegebenenfalls unter Zusatz anderer Festbrennstoffe wie Kohle, insbesondere Braunkohlenbrikoletts, verfeuert werden.

## Patentansprüche

1. Verdichteter Festbrennstoff enthaltend Holz und/oder einen holzartigen Stoff als zellulosehaltige Brennstoffkomponente und als weitere Komponente Pferdedung, der in inniger Vermengung mit der zellulosehaltigen Brennstoffkomponente vorliegt, **dadurch gekennzeichnet, dass** das Holz und/oder der holzartige Stoff in Form von Spänen oder das Holz in Form von Holzwolle vorliegt.

2. Festbrennstoff nach Anspruch 1, **dadurch gekennzeichnet, dass** der Holzanteil am Festbrennstoff 40 bis 80 Gew.-%, besonders bevorzugt 50 bis 70 Gew.-%, beträgt.

3. Festbrennstoff nach einem der Ansprüche 1 bis 2, **dadurch gekennzeichnet, dass** der Anteil an Pferdedung 20 bis 60 Gew.-%, besonders bevorzugt 30 bis 50 Gew.-%, beträgt.

4. Festbrennstoff nach einem der Ansprüche 1 bis 3, **dadurch gekennzeichnet, dass** der Festbrennstoff Harnstoff enthält.

5. Festbrennstoff nach Anspruch 4, **dadurch gekennzeichnet, dass** der Festbrennstoff mehr als 5 mg Harnstoff je Kilogramm Festbrennstoff enthält.

6. Festbrennstoff nach einem der Ansprüche 1 bis 5, **dadurch gekennzeichnet, dass** der Feuchtigkeitsgehalt des Festbrennstoffes kleiner als 8 Gew.-% beträgt.

7. Festbrennstoff, enthaltend 20 bis 100 Gew.-% eines Festbrennstoffes nach einem der Ansprüche 1 bis 6.

8. Verfahren zur Herstellung eines Festbrennstoffes nach einem der Ansprüche 1 bis 7, wobei nacheinander die folgenden Schritte durchgeführt werden:
- Holz und/oder ein holzartiger Stoff werden als zellulosehaltige Brennstoffkomponente mit Pferdedung innig miteinander vermischt,
- die Mischung wird vorgetrocknet,
- die vorgetrocknete Mischung wird unter Druck verdichtet,
**dadurch gekennzeichnet, dass** das Holz und/oder der holzartige Stoff in Form von Spänen oder das Holz in Form von Holzwolle vorliegt.

9. Verfahren nach Anspruch 8, **dadurch gekennzeichnet, dass** die Mischung auf einen Feuchtigkeitsgehalt von höchstens 18 Gew.-% vorgetrocknet wird.

10. Verfahren nach Anspruch 8 oder 9, **dadurch gekennzeichnet, dass** die Verdichtung unter einem Druck von 40 bis 100 bar erfolgt.

11. Verfahren nach einem der Ansprüche 8 bis 10, **dadurch gekennzeichnet, dass** die Herstellung des Festbrennstoffes derart erfolgt, dass der verdichtete Festbrennstoff Harnstoff enthält.

12. Verfahren nach Anspruch 11, **dadurch gekennzeichnet, dass** die Herstellung des Festbrennstoffes derart erfolgt, dass der verdichtete Festbrennstoff mehr als 5 mg Harnstoff je Kilogramm Festbrennstoff enthält.

13. Verfahren zur Verfeuerung von Brennstoffen, wobei ein Festbrennstoff einer Feuerungsstelle zugeführt wird, **dadurch gekennzeichnet, dass** ein Festbrennstoff nach einem der Ansprüche 1 bis 7 der Feuerungsstelle zugeführt wird.

14. Verfahren nach Anspruch 13, **dadurch gekennzeichnet, dass** der Festbrennstoff nach einem der Ansprüche 1 bis 7 mit einem weiteren Brennstoff in einem losen Gemisch oder zeitlich nacheinander der Feuerungsstelle zugeführt wird.

## Claims

1. Compacted solid fuel containing wood and/or a timber-like material as the cellulose-containing fuel component and horse manure as a further component, the horse manure having been intimately mixed with the cellulose-containing fuel component, **characterised in that** the wood and/or timber-like material is in the form of shavings or the wood is in the form of wood wool.

2. Solid fuel according to claim 1, **characterised in that** the timber component makes up 40 to 80 % by weight of the solid fuel, most preferably 50 to 70 % by weight.

3. Solid fuel according to either of claims 1 and 2, **characterised in that** the proportion of horse manure is 20 to 60 % by weight, most preferably 30 to 50 % by weight.

4. Solid fuel according to any of claims 1 to 3, **characterised in that** the solid fuel contains urea.

5. Solid fuel according to claim 4, **characterised in that** the solid fuel contains more than 5 mg of urea per kilogram of solid fuel.

6. Solid fuel according to any of claims 1 to 5, **characterised in that** the moisture content of the solid fuel is less than 8 % by weight.

7. Solid fuel containing 20 to 100 % by weight of a solid fuel as claimed in any of claims 1 to 6.

8. Process for producing a solid fuel as claimed in any of claims 1 to 7, in which the following steps are performed one after the other:
- wood and/or a timber-like material, as the cellulose-containing fuel component, is mixed intimately with horse manure,
- the mixture is pre-dried,
- the pre-dried mixture is compacted under pressure.
**characterised in that** the wood and/or timber-like material are in the form of shavings or the wood is in the form of wood wool.

9. Process according to claim 8, **characterised in that** the mixture is pre-dried to a moisture content of not more than 18 percent by weight.

10. Process according to claim 8 or 9, **characterised in that** compacting takes place at a pressure of 40 to 100 bars.

11. Process according to any of claims 8 to 10, **characterised in that** the solid fuel is produced in such a way that the compacted solid fuel contains urea.

12. Process according to claim 11, **characterised in that** the solid fuel is produced in such a way that the compacted solid fuel contains more than 5 mg of urea per kilogram of solid fuel.

13. Process for burning fuels involving feeding a solid fuel to a firing place, **characterised in that** a solid fuel as claimed in any of claims 1 to 7 is fed to the firing place.

14. Process according to claim 13, **characterised in that** the solid fuel as claimed in any of claims 1 to 7 is fed to the firing place along with another fuel in an unconsolidated batch or chronologically in turn.

## Revendications

1. Combustible solide compacté comprenant du bois et/ou un matériau ligneux comme composants combustibles cellulosiques et du fumier de cheval comme autre composant lequel est mélangé intimement avec les composants combustibles cellulosiques, **caractérisé en ce que** le bois et/ou le matériau ligneux sont sous forme de copeaux ou le bois est sous forme de fibre.

2. Combustible solide selon la revendication 1, **caractérisé en ce que** la proportion de bois dans le combustible solide s'élève à une valeur de 40 % à 80 % en poids, en particulier de préférence de 50 % à 70 % en poids.

3. Combustible solide selon l'une quelconque des revendications 1 à 2, **caractérisé en ce que** la proportion de fumier de cheval s'élève à une valeur de 20 % à 60 % en poids, en particulier de préférence de 30 % à 50 % en poids.

4. Combustible solide selon l'une quelconque des revendications 1 à 3, **caractérisé en ce que** le combustible solide contient de l'urée.

5. Combustible solide selon la revendication 4, **caractérisé en ce que** le combustible solide contient plus de 5 mg d'urée par kilogramme de combustible solide.

6. Combustible solide selon l'une quelconque des revendications 1 à 5, **caractérisé en ce que** la teneur en humidité du combustible solide s'élève à une valeur inférieure à 8 %.

7. Combustible solide, contenant 20 % à 100 % en poids d'un combustible solide selon l'une quelconque des revendications 1 à 6.

8. Procédé pour fabriquer un combustible solide selon l'une quelconque des revendications 1 à 7, dans lequel les étapes suivantes sont exécutées l'une après l'autre :
- du bois et/ou un matériau ligneux, en tant que composants combustibles cellulosiques, sont mélangés intimement ensemble avec du fumier de cheval,
- le mélange est séché,
- le mélange séché est compacté sous pression,
**caractérisé en ce que** le bois et/ou le matériau ligneux est sous forme de copeaux ou le bois sous forme de fibre.

9. Procédé selon la revendication 8, **caractérisé en ce que** le mélange est séché jusqu'à une teneur en humidité au maximum de 18 % en poids.

10. Procédé selon la revendication 8 ou 9, **caractérisé en ce que** le compactage est effectué sous une pression de 40 bars à 100 bars.

11. Procédé selon l'une quelconque des revendications 8 à 10, **caractérisé en ce que** la fabrication du combustible solide est effectuée de telle manière que le combustible solide compacté contienne de l'urée.

12. Procédé selon la revendication 11, **caractérisé en ce que** la fabrication du combustible solide est effectuée de telle manière que le combustible solide compacté contienne plus de 5 mg d'urée par kilogramme de combustible solide.

13. Procédé pour brûler des combustibles, dans lequel un combustible solide alimente un foyer, **caractérisé en ce qu'**un combustible solide selon l'une quelconque des revendications 1 à 7 alimente le foyer.

14. Procédé selon la revendication 13, **caractérisé en ce qu'**un combustible solide selon l'une quelconque des revendications 1 à 7 alimente le foyer en mélange avec un autre combustible en vrac ou l'un après l'autre au cours du temps.
